Europäisches Patentamt

European Patent Office

Office européen des brevets

(11) Numéro de publication: **0 187 566**
**A1**

## (12) DEMANDE DE BREVET EUROPEEN

(21) Numéro de dépôt: 85402326.4

(22) Date de dépôt: 27.11.85

(51) Int. Cl.⁴: **C 04 B 28/16**
**E 21 D 11/00**
**//(C04B28/16, 18:08, 22:14)**

(30) Priorité: 30.11.84 FR 8418270

(43) Date de publication de la demande:
16.07.86 Bulletin 86/29

(84) Etats contractants désignés:
BE DE LU NL

(71) Demandeur: **S.T.A.M.**
**Rue Wilson**
**F-57300 Hagondange(FR)**

(72) Inventeur: **Bold, Jörg**
**Dürerstrasse 12**
**D-6750 Kaiserslautem(DE)**

(74) Mandataire: **CABINET BONNET-THIRION**
**95 Boulevard Beaumarchais**
**F-75003 Paris(FR)**

(54) **Catalyseur de prise de mortiers d'anhydrite projetés à la lance, à résistance améliorée à un stockage à température et humidité élevées, et utilisation d'un tel catalyseur.**

(57) Le catalyseur comprend, en proportions pondérales, de 75 à 80% d'un mélange de sulfates cristallisés et de 25 à 15% de cendres volantes de centrales thermiques au charbon; le mélange de sulfates cristallisés contient, en poids, de 48 à 52% de Fe $SO_4$, 7 $H_2O$ et au moins 38% de $SO_4K_2$. Les cendres volantes ont la composition typique $Al_2O_3$ 30% $SiO_2$ 50%, $Fe_2O_3$ 10%, $K_2O$ 5%, le reste étant des traces d'oxydes et sulfures divers. Les sulfates cristallisés contiennent, outre Fe $SO_4$, 7 $H_2O$ et $K_2$ $SO_4$, au moins 2% d'un sulfate pris parmi Fe $SO_4$, $H_2O$, $Al_2(SO_4)_3$, 18 $H_2O$ et Ca $SO_4$, 2 $H_2O$. Les meilleurs résultats correspondent à 8,5% de Fe $SO_4$, $H_2O$ ou à 2,5% d'$Al_2(SO_4)_3$, 18 $H_2O$ dans le mélange de sulfates.

Pour l'utilisation pour la prise rapide de mortiers d'anhydrite projetés à la lance, notamment en soutènement de mines, la proportion de catalyseur en poids sera de 0,8 à 1,5% et au mieux voisine de 1%.

EP 0 187 566 A1

## Catalyseur de prise de mortiers d'anhydrite projetés à la lance, à résistance améliorée à un stockage à température et humidité élevées, et utilisation d'un tel catalyseur.

L'invention se rapporte à un catalyseur de prise pour mortiers d'anhydrite projetés à la lance, notamment pour soutènement dans les mines, catalyseur à résistance améliorée vis-à-vis de températures d'humidité élevées en stockage et comportant des cristaux de sulfate de fer hydraté et d'un sulfate alcalin, farinés par une poudre inerte contenant de la silice.

La demande de brevet FR-A-2.475.528 propose un catalyseur pour mortier d'anhydrite composé en poids de 25 à 80 % d'anhydrite et de 75 à 20 % de granulats neutres humides passant à la maille de 50 mm et refusés à la maille 4 mm, la proportion pondérale de ces granulats refusés à la maille de 25 mm étant d'au plus 45 % ; ce catalyseur est ajouté à raison de 1 à 1,6 % par rapport à la masse de prise, et contient outre un mélange de sels de métaux alcalins et de métaux de transition, entre 5 et 20 % en poids de terre de diatomées.

Plus précisément les sels constituant le catalyseur sont des chlorures ou des sulfates, les métaux de transition sont fer et zinc, et le rapport pondéral entre sel de métal alcalin et sel de métal de transition est compris entre 1/2 et 1/8.

Typiquement le catalyseur est formé par mélange intime de 20 parties de terre de diatomées, 15 parties de sulfate de potassium et 65 parties de sulfate de fer neige, et est utilisé à raison de 1,3 % par rapport à la masse de prise.

On a constaté que ce catalyseur qui donne d'excellents résultats pour la catalyse de la prise du mortier, ne peut être stocké à des températures supérieures à 25°C avec des taux d'humidité de l'atmosphère de 95 % et plus sans qu'il se produise des prises en masse d'agglomérats, inconvénients connus sous le nom de mottage. Or dans les mines, l'humidité relative est pratiquement en permanence supérieure à 95 %, et la température atteint couramment 35°C et peut avoisiner 50°C. Il en résulte que les catalyseurs actuels ne peuvent être stockés au fond dans des conditions qui assurent une bonne conservation, et il est recommandé de les utiliser sensiblement au fur et à mesure qu'ils arrivent au fond.

Pour pallier cet inconvénient, l'invention propose un catalyseur de prise pour mortier d'anhydrite projeté à la lance, notamment pour soutènement dans les mines, présentant une résistance améliorée au mottage au cours de stockage à température et humidité élevées, et comprenant des cristaux de sulfate de fer hydraté et de sulfate alcalin, farinés par une poudre inerte contenant de la silice comme constituant majeur, caractérisé en ce qu'il contient, en proportions pondérales de 75 à 85 % d'un mélange de sulfates cristallisés et de 25 à 15 % de cendres volantes de centrales thermiques au charbon, le mélange de sulfates cristallisés contenant, en poids, de 48 à 52 % de sulfate de fer heptahydraté, et au moins 38 % de sulfate de potassium.

La sélection de cette composition a permis d'obtenir des catalyseurs qui en stockage à près de 40°C et 95 % d'humidité relative, ne sont pas mottants.

En outre, comportant une quantité moindre de sulfate de fer heptahydraté que les catalyseurs typiques antérieurs, les poussières produites par les manutentions sont moins acides et irritantes pour la peau et les voies respiratoires.

De plus la silice contenue dans les cendres volantes est vitrifiée et non génératrice de silicose.

De préférence le mélange de sulfates cristallisés contient, en poids, outre $Fe SO_4$, $7 H_2O$ et $K_2SO_4$, au moins 2 % d'un sulfate pris parmi $Fe SO_4$, $H_2O$, $Al_2(SO_4)_3$, $18 H_2O$ et $Ca SO_4$, $2 H_2O$.

La teneur pondérale préférée de $Fe SO_4$, $H_2O$ est de 8 à 9 %, et celle de $Al_2(SO_4)_3$, $18 H_2O$, entre 2,2 et 2,7 %.

Le catalyseur de l'invention est utilisé, de préférence, à raison de 0,8 à 1,5 % en poids par rapport à la masse de prise.

Les caractéristiques et avantages de l'invention ressortiront d'ailleurs de la description qui va suivre, assortie d'exemples.

On précise que si les mortiers d'anhydrite qui comprennent des granulats présentent, par rapport à l'anhydrite seule, des résistances à la compression améliorées et des caractéristiques de prise, notamment vitesse de première prise plutôt supérieure, les contrôles des qualités des catalyseurs seront effectués de préférence avec de l'anhydrite sans granulats, dans le but d'éliminer une variable, le comportement des granulats, qui serait susceptible de masquer l'action du catalyseur.

Tous les essais qui seront reportés plus loin ont été effectués avec une anhydrite de composition pondérale moyenne.

TABLEAU I

| Anhydrite (Ca $SO_4$) | 94 % |
|---|---|
| Gypse (Ca $SO_4$, 2 $H_2O$) | 2 % |
| Dolomie et marne | 4 % |

Les catalyseurs de l'invention comportent une certaine teneur pondérale de cendres volantes de centrales thermiques au charbon. La composition pondérale moyenne de ces cendres volantes est approximativement :

TABLEAU II

| Alumine $Al_2O_3$ | 30 % |
|---|---|
| Silice (vitrifiée) $SiO_2$ | 50 % |
| Oxyde ferrique $Fe_2O_3$ | 10 % |
| Oxyde de potassium $K_2O$ | 5 % |

le complément étant constitué d'oxydes et de sulfures d'éléments divers, individuellement à l'état de traces.

On remarquera toutefois qu'aussi bien l'anhydrite que les cendres volantes sont des matières premières dont la composition est susceptible de variations autour des valeurs moyennes indiquées, sans que pour autant les variations de composition induisent des variations marquées de propriétés.

Les essais ont porté sur quatre compositions de catalyseur référencées 1 à 4. A titre de comparaison on a fait un essai avec un catalyseur usuel (référencé A) comportant environ 2 parties pondérales de sulfate de fer heptahydraté pour une partie de sulfate de potassium, et un catalyseur (référencé B) constitué à parts pondérales égales de sulfate de fer heptahydraté et de sulfate de potassium.

Les compositions pondérales des différents catalyseurs sont rassemblées dans le Tableau III.

TABLEAU III

(proportions pondérales)

| Ref. | $FeSO_4$ $7 H_2O$ | $K_2SO_4$ | Cendres volantes | $FeSO_4$ $H_2O$ | $CaSO_4$ $2 H_2O$ | $Al_2(SO_4)_3$ $18 H_2O$ |
|------|------|------|------|------|------|------|
| A | 65 | 35 | | | | |
| B | 50 | 50 | | | | |
| 1 | 38,5 | 38,5 | 23 | | | |
| 2 | 38,5 | 30 | 23 | 8,5 | | |
| 3 | 38,5 | 38,5 | 15 | | 8 | |
| 4 | 38,5 | 38,5 | 21 | | | 2 |

Pour apprécier le comportement des catalyseurs en stockage, on a prélevé trois échantillons de chacun des catalyseurs A, B et 1 à 4 que l'on a placé chacun dans un récipient en verre qui a été hermétiquement fermé. Un échantillon de chaque catalyseur a été maintenu en étuve à température réglée pendant 24 heures, les températures des étuves étant respectivement 20, 38 et 48°C. Après cet essai, en agitant les récipients on a estimé le degré d'agglomération des échantillons, que l'on a classé en fluides (0) lorsque les cristaux de sulfate roulaient librement sur les autres, peu mottants (+) lorsqu'une partie des cristaux étaient agglomérés en grumeaux qu'une agitation violente désagréable, et mottants (++) lorsque l'ensemble du contenu du récipient était pris en masse, ou se séparait en blocs difficiles à désagréger.

Les comportements sont résumés dans le Tableau IV ci-après.

TABLEAU IV

| Catalyseur | Stockage | | |
|:---:|:---:|:---:|:---:|
| | 20°C | 38°C | 48°C |
| A | O | + | ++ |
| B | O | + | ++ |
| 1 | O | O | ++ |
| 2 | O | O | O |
| 3 | O | O | + |
| 4 | O | O | O |

On remarquera que, sous l'aspect du comportement en stockage les catalyseurs 1 à 4 montrent une amélioration certaine par rapport aux catalyseurs de comparaison. Les meilleurs résultats sont obtenus avec les catalyseurs 2 et 4 suivis du catalyseur 3, tandis que le catalyseur 1 ne supporte pas un stockage à plus de 40°C.

On a étudié les résistances à la compression des mortiers d'anhydrite après 24 H, la température ambiante étant réglée à 20 et 25°C et l'humidité relative étant de 95 % pour diverses quantités pondérales de catalyseur. La quantité d'eau ajoutée a été uniformément de 9 % en poids. Les résistances à la compression sont exprimées en Megapascals (MPa), arrondies à la demi-unité la plus proche.

Le minimum acceptable de résistance à la compression est fixé conventionnellement à 10 MPa.

Les résultats sont résumés dans le Tableau V.

TABLEAU V

| Catalyseur | % pondéral | Résistance à 24 H. | |
| --- | --- | --- | --- |
| | | 20°C | 25°C |
| A { | 0,8<br>1,0<br>1,5 | 11<br>14<br>11,5 | 9<br>12<br>10 |
| B | 0,8 | 16 | 13 |
| 1 | 1,0 | 15 | 13 |
| 2 | 1,0 | 15 | 13 |
| 3 { | 0,8<br>1,0<br>1,5 | 12,5<br>16<br>13 | 10<br>13,5<br>12 |
| 4 | 1,0 | 15 | 12,5 |

De ce tableau il apparaît que la proportion pondérale de catalyseur la plus favorable est 1 %, aussi bien pour le catalyseur usuel A que le catalyseur selon l'invention 3. Par ailleurs, le catalyseur connu B donne des résultats au moins aussi bons en résistance à la compression que les catalyseurs selon l'invention ; mais comme le faisait ressortir le Tableau IV, ses performances sont médiocres en stockage à température élevée. On notera d'ailleurs que, si l'on considère les sulfates actifs $Fe\,SO_4$, $7\,H_2O$ et $K_2\,SO_4$, les quantités apportées par 0,8 % de catalyseur B sont comparables à celles qu'apportent 1 % des catalyseurs 1 à 4.

On a constaté que lorsque le catalyseur a été traité, avant utilisation, à une température de 45°C pendant une durée suffisante pour que son état soit stabilisé, on obtenait des résistances à la compression améliorées. Ainsi les échantillons auxquels on a ajouté 1 % de catalyseur 4 présentent à 20 et 25°C des résistances respectives à la compression de 15 et 13 MPa. Ces résistances deviennent respectivement 15,5 et 14 MPa lorsque le catalyseur a été traité à 45°C par le processus exposé précédemment.

On remarquera que ce prétraitement suppose que le catalyseur ne s'agglomère pas au cours du chauffage.

7

0187566

Bien entendu, l'invention n'est pas limitée aux exemples décrits, mais en embrasse toutes les compositions de catalyseur définies par les revendications.

REVENDICATIONS

1. Catalyseur de prise pour mortier d'anhydrite projeté à la lance, notamment pour soutènement dans les mines, présentant une résistance améliorée au mottage au cours de stockages à température et humidité élevées, et comprenant des cristaux de sulfate de fer hydraté et de sulfate alcalin, farinés par une poudre inerte contenant de la silice comme constituant majeur, caractérisé en ce qu'il contient, en proportions pondérales, de 75 à 85 % d'un mélange de sulfates cristallisés et de 25 à 15 % de cendres volantes de centrales thermiques au charbon, le mélange de sulfates cristallisés contenant, en poids, de 48 à 52 % de sulfate de fer heptahydraté, et au moins 38 % de sulfate de potassium.

2. Catalyseur selon la revendication 1, caractérisé en ce que lesdites cendres volantes ont une composition pondérale moyenne approximative ainsi définie : $Al_2O_3$  30 %, $SiO_2$  50 %, $Fe_2O_3$  10 %, $K_2O$  5 %, le reste étant constitué de traces d'oxydes et sulfures divers.

3. Catalyseur selon l'une des revendications 1 et 2, caractérisé en ce que le mélange de sulfates cristallisés contient, outre $Fe SO_4$, 7 $H_2O$ et $K_2SO_4$, au moins 2 % en poids d'un sulfate pris parmi $Fe SO_4$, $H_2O$ ; $Al_2(SO_4)_3$, 18 $H_2O$ ; et $Ca SO_4$, 2 $H_2O$.

4. Catalyseur selon l'une des revendications 1 et 2, caractérisé en ce qu'il contient, en poids, au moins 20 % de cendres volantes et en ce que ledit mélange de cristallisés contient, outre $Fe SO_4$, 7 $H_2O$ et $K_2 SO_4$, au moins 2 % en poids d'un sulfate pris parmi $Fe SO_4$, $H_2O$ et $Al_2(SO_4)_3$, 18 $H_2O$.

5. Catalyseur selon la revendication 4, caractérisé en ce que ledit mélange de sulfates cristallisés contient, outre $Fe SO_4$, 7 $H_2O$ et $K_2SO_4$, entre 8 et 9 % en poids de $Fe SO_4$, $H_2O$.

6. Catalyseur selon la revendication 4, caractérisé en ce que ledit mélange de sulfates cristallisés contient, outre $Fe SO_4$, 7 $H_2O$ et $K_2 SO_4$, entre 2,2 et 2,7 % en poids de $Al_2(SO_4)_3$, 18 $H_2O$.

7. Utilisation d'un catalyseur selon une quelconque des revendications 1 à 6, caractérisée par une quantité pondérale

de cc catalyseur de 0,8 à 1,5 % par rapport à la masse de prise.

8. Utilisation suivant la revendication 7, caractérisée en ce que le catalyseur a été antérieurement traité à une température d'environ 45°C, jusqu'à stabilisation de son état.

Office européen
des brevets

**RAPPORT DE RECHERCHE EUROPEENNE**

**0187566**
Numéro de la demande

EP    85  40  2326

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 035 921  (STAM) <br> *  Revendications 1-3* & FR - A - 2 475 528 (Cat. D) | 1 | C 04 B   28/16 <br> E 21 D   11/00 // <br> (C 04 B   28/16 <br> C 04 B   18:08 <br> C 04 B   22:14 ) |
| A | CH-A-  335 597  (BUR. D'ETUDES & LAB. INSTITUT MEURICE-CHEMIE et al.) <br> * Exemple 1 * | 1 | |

DOMAINES TECHNIQUES RECHERCHES (Int. Cl.4)

C 04 B   28/00
E 21 D   11/00
E 21 F   15/00

Le présent rapport de recherche a été établi pour toutes les revendications

| Lieu de la recherche | Date d'achèvement de la recherche | Examinateur |
|---|---|---|
| LA HAYE | 04-03-1986 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82